# EUROPEAN PATENT SPECIFICATION

(11) **EP 1 312 041 B1**
(45) Date of publication and mention of the grant of the patent: **27.09.2006**
(21) Application number: 01952074.1
(22) Date of filing: 16.07.2001
(51) Int. Cl.: G06K 9/60, G06K 9/78

(54) **METHOD AND MEANS FOR MOBILE CAPTURE,PROCESSING, STORAGE AND TRANSMISSION OF TEXT AND MIXED INFORMATION CONTAINING CHARACTERS AND IMAGES**
VERFAHREN UND MITTEL ZUR MOBILEN ERFASSUNG, VERARBEITUNG, SPEICHERUNG UND ÜBERTRAGUNG VON TEXT UND GEMISCHTEN INFORMATIONEN, DIE ZEICHEN UND BILDER ENTHALTEN
PROCEDE ET MOYEN MOBILE DE SAISIE, DE TRAITEMENT, DE STOCKAGE ET DE TRANSMISSION DE TEXTE ET DE DONNEES MIXTES CONTENANT DES CARACTERES ET DES IMAGES

(30) Priority: 19.07.2000 SE 0002736; 17.11.2000 SE 0004231
(43) Date of publication of application: 21.05.2003
(73) Proprietor: Weitman, Jacob, 182 63 Djursholm (SE)
(72) Inventor: Weitman, Jacob, 182 63 Djursholm (SE)
(74) Representative: Lettström, Richard Wilhelm
(86) International application number: PCT/SE2001/001637
(87) International publication number: WO 2002/013128

(56) References cited:
- EP-A- 0 865 492
- WO-A1-99/17259
- DE-A1- 19 812 082
- CARLSSON TOMAS: 'Nytt bildformat superkomprimerar filerna' NY TEKNIK, [Online] 10 March 1999, XP002905411 Retrieved from the Internet: <URL:http://www.nyteknik.se/pub/ipsart.asp? art_id=8041> [retrieved on 2001-12-07]
- FUJISAWA H. ET AL: 'Information capturing camera and developmental issues' DOCUMENT ANALYSIS AND RECOGNITION 20 September 1999, LOS ALAMITOS, CA, USA,IEEE COMPUT. SOC, US, pages 205 - 208, XP010351192
- JIE YANG ET AL: 'Smart Sight: a tourist assistant system' WEARABLE COMPUTERS 18 October 1999, LOS ALAMITOS, CA, USA,IEEE COMPUT. SOC, US, pages 73 - 78, XP010360088
- MUDRA R.; THALER M.; TROSTER G.: 'Smart camera system' PROCEEDINGS OF THE SPIE vol. 2950, 09 October 1996, SPIE, BELLINGHAM, VA, US, pages 185 - 195, XP001023876
- SHAPIRO: 'Viewpoint: Intelligent Cameras' SENSOR REVIEW vol. 16, no. 3, 1996, MCB UNIVERSITY PRESS, pages 4 - 5
- PYSSYSALO ET AL: 'Bringing Augmented Reality to Next Generation Mobile Phones' PROC. DARE 2000 April 2000,

## Description

There are numerous situations where there is a genuine need to capture quickly, efficiently and in a simple way large amounts of information in the form of text or text+ images, without access to technical resources such as copying machines, scanners, faxes and computers, today frequently available at offices. As an example of a situation where the present invention would be highly useful we may take a journey by air, where the traveller just read an interesting, by images and diagrams possibly illustrated article in, let say, Financial Times and where the traveller either wishes to as quickly as possible transmit the corresponding information to a colleague or to save the article as reference material for himself and others. Today, this reader has the option to either tear out the interesting pages or to take along the complete newspaper. During a conference trip or another longer journey the situation may repeat itself, resulting in a cumbersome practical paper-handling problem.

There is a vast number of similar situations, where one wishes to be able to collect and/or to transfer printed information which one has received, without being limited by or dependent on an office with modem resources, such as, e.g., when reading or working in bed due to illness or laziness.

In "Haffner et al."DjVu: Analysing and Compressing Scanned Documetns for Internet Distribution", Proc. ICDAR '99" a method for mobile capture is disclosed. It must, however, be emphasized that DjVu refers to documents scanned with a high resolution scanning technique in a scanner under ideal lightning and planar conditions.

In Fujsawa et al., "Information Capturing Camera and Developmental Issues", Proc. ICDAR'99, a mobile digital camera is disclosed which can, aided by user interaction, locate test blocks, recognize the test and provide a translation of the text to the uses.

The aim of the present invention is to solve in an efficient, practical and flexible way the problem thus indicated. The solution is based' on a combination and further development of available technologies, primarily digital photography, intelligent image processing incl. OCR, vector graphics, data compression, broadband data transmission and database handling.

The basis for the invention is the use of a compact digital camera, preferably equipped with optics for wide angle, large aperture and a large depth of sharpening also at short distances, where the intelligence is based on software for processing and interpretation of the *entire* image in such a way that those parts containing text are recognized and transformed to and stored as, e.g., ASCII- or EBCDIC-code, while the remaining parts are stored as an image with desired resolution.

A special characteristic of the method according to the invention is furthermore that the software has intelligence for the interpretation of image qualities such as font and layout and the ability to use the interpretation to recreate/synthesize a picture, which is matched against (laid over) the original text. In case of acceptable result of the matching, those parts of the original image, which contain blocks of text, are deleted, where after the information stored consists of coded text, layout information and uninterpreted image parts.

In those cases where an acceptable match of the original and the recreated/synthesized images of the text blocks has not been achieved, the raw image is stored in its original format. The result of the matching may, e.g., be expressed as the percentage of dots in agreement. Also in case of a percentage-wise very good match there may be single characters, words or passages, which have not been correctly interpreted. Such uninterpreted or incorrectly interpreted original information is not deleted from the text block, but rather displayed as a suitably marked image insert in the interpreted text. The user thereby has the opportunity to thereafter intervene and help the programme with the interpretation of the sections thus marked.

A further characteristic of the method according to the invention is that the interpretation software, which in a preferred embodiment of the invention is installed in the camera itself, but which also may be implemented in an external unit, includes algorithms based on vector graphical methods for analyzing and storing information about the layout of the original image and that this information is used in context with the matching procedure of the original and the synthesized images and, optionally, when later printing out the synthetic image, in order to recreate a layout which is adapted to the print out format chosen (e.g. A4) and as closely as possible reproduces the original layout. This is important, because the layout (including aspects such as under linings, italics, subdivision in sections, etc.) may be important for the understanding of content and context.

As an option, the camera may be provided with framing functions, so that only specifically chosen parts of the image are stored and processed, whereby text or image information, which is regarded as dispensable (such as a picture with a blue sky and a swaying cornfield in an article about our environment, or a picture of a provocative female in an article on the roles of the sexes)) is eliminated already at source.

According to the invention, the information may be tagged already by the software of the intelligent camera, so that later handling of information in databases is facilitated. This is achieved by inherent functionality for the automatic recognition of such characteristics as headings and names of authors, as well as automatic selection of keywords out of headings.

For greater versatility the software of the intelligent camera may be extended by options for translation between various languages and/or for interpretation of mathematical symbols and formulas and/or recognition of one or several handwritings. The handwriting recognition may be preferably based on algorithms for self-learning in neural systems.

Depending on the state of development with respect to memory and processor capacities, as much as possible of the intelligence is located within the camera itself. However, functions and options, which at a given state of development are regarded as too demanding from the point of view of memory or processor capacity and performance, may be implemented and executed externally, whereby high-speed communication protocols (such as FIRE WiRE 1394) may be very useful.

Connecting the intelligent mobile digital camera to a mobile phone with broadband transmission capacity will enable transmission of interpreted and compressed data to one's own database or to third parties. The transmission may be performed either in real time or delayed, based on stored data.

A practical important characteristic of the means according to the invention is that the camera may be equipped for ultra-wide-angle photography, so that, e.g., a whole page of the initially mentioned newspaper publication can be captured in one exposure at a normal distance of observation (0.3 to 0.5 m). This may be achieved either by means of special wide angle lenses, whereby distortions are corrected numerically, or by facet lenses according to the apposition or superposition principle, whereby a complete image is synthesized computationally, or by optics with a scanning arrangement such as a moving mirror, in which case the complete picture is also composed by the software.

Within the scope of the invention, it is of course allowed that the intelligent camera may be used as a conventional digital camera as well.

## Claims

1. Method for mobile intelligent imaging, by which a digital camera is used to capture, process and store text symbols and mixed information of text symbols and images, in image captured by means of said digital camera with microprocessor, memory and software, said image taken by said camera being analyzed with respect to its information, which is recognized and interpreted by text recognition techniques and is stored as compressed code for further processing, **characterized in that** the camera performs the steps of
a) enabling the user to decide whether said camera shall be used as an intelligent camera or as a conventional camera and, if the camera is to be used as an intelligent camera,
b) interpreting the original image,
c) using the interpretation to recreate/synthesize a picture,
d) comparing the recreated synthesized picture to the original image,
e) suitably marking sections of un-interpreted or incorrectly interpreted original information determined based on the results of the comparison and
f) enabling the user to intervene when required and help the camera with the interpretation of said sections, and
g) transmitting the result by a mobile phone connected to said camera.

2. Method according to claim 1, **characterized by** the step of deleting the original image from the memory of the camera when there is a sufficiently good match between said original image an said recreated synthesized image.

3. Method according to claim 1, **characterized by** the step of recognizing text properties such as font, under linings, bold print etc. and adding them to the interpreted text.

4. Method according to claim 2, **characterized by** the step of not deleting but displaying in the recreated/synthesized image text information, which could not be interpreted, as a suitably marked portion of the pertinent original character/word/symbol/paragraph.

5. Method according to anyone of claims 1 - 3, **characterized by** the step of segmenting the original image into two blocks, whereby one block contains the interpreted information and the other block the remaining relevant information from the original image and tagging these blocks such that they can be processed and transmitted individually and, whenever desired, recombined to create a reproduction of the original image.

6. Method according to anyone of the claims 1-4, **characterized by** the step of performing, in context with reproduction of the recombined image on another format than the format of the original image, said reproduction such that the layout of the reproduced image agrees as closely as possible with that of the original image.

7. Method according to anyone of the claims 1-5, **characterized by** the step of automatically analyzing text information with regard to such characteristics as name of author and publication and keywords out of headings and tagging the test information with said characteristics, thereby facilitating systematic storage and retrieval of information in databases.

8. Means adapted to perform the method of claims 1 - 7 for mobile intelligent capture, processing, storage of text symbols and mixed information of text symbols and images, in an image, said means comprising a digital camera with microprocessor, memory and software for analyzing the image with respect to its information, which is recognized and interpreted by text recognition techniques and is stored as compressed code for further processing, wherein said means comprises a mobile phone connected to said camera, whereby said interpreted information is transmitted by said mobile phone.

9. Means according to claim 8, **characterized in that** the lens of the camera is designed for ultra-wide-angle.

10. Means according to claim 9, **characterized in that** distortions in the lens are numerically corrected, so that an undistorted image can be recreated.

11. Means according to claim 9, **characterized in that** said lens is designed as a facet lens according to the apposition principle, with certain overlapping between the partial images and that a continuous total image is produced by the software.

12. Means according to claim 9, **characterized in that** said lens is designed as a facet lens according to the superposition principle and that, when required, distortions are corrected by the software.

13. Means according to any of claims 8 - 12, **characterized in that** said camera is provided with framing functions, so that only specific chosen parts of the image are stored and processed, thereby eliminating dispensable information already at source.

## Patentansprüche

1. Methode für mobile intelligente Bildherstellung, mit der eine digitale Kamera benutzt wird, um Texte/Symbolen und gemischte Informationen von Texte und Bilder in Bildern, die mittels der genannten digitalen Kamera mit Mikroprozessor, Speicher und Software aufgenommen wurden, zu verarbeiten und zu lagern, wobei das genannte Bild, welches durch die genannte Kamera aufgenommen wurde, in Bezug auf seine Informationen - die durch Techniken der Texterkennung erkannt und interpretiert wurden - analysiert wird, und als komprimierte Kode für die Weiterverarbeitung gespeichert wird, **gekennzeichnet dadurch, dass**
a) der Benutzer entscheidet, ob die genannte Kamera als intelligente Kamera oder als herkömmliche Kamera benutzt werden soll und dass, wenn die Kamera als intelligente Kamera benutzt wird,
b) das ursprüngliche Bild interpretiert wird,
c) die Interpretierung zur Wiedererstellung/Synthetisierung eines Bilds benutzt wird,
d) das wiedererstellte/synthetisierte Bild mit dem ursprünglichen Bild verglichen wird,
e) Abschnitte der nicht interpretierten oder falsch interpretierten, ursprünglichen Informationen, auf Grund der Ergebnisse des Vergleichs festgestellt und passend markiert werden,
f) der Benutzer wenn erforderlich eingreift, um die Kamera mit der Interpretierung der genannten Abschnitte zu helfen, und
g) das Ergebnis mit einem Mobilfernsprecher, welches an die genannte Kamera angeschlossen ist, übertragen wird.

2. Methode entsprechend Anspruch 1, **gekennzeichnet dadurch, dass** das ursprüngliche Bild aus dem Speicher der Kamera gelöscht wird, wenn es eine genügend gute Übereinstimmung zwischen dem ursprünglichen Bild und dem wiedererstellten/synthetisierten Bild gibt.

3. Methode entsprechend Anspruch 1, **gekennzeichnet dadurch, dass** Eigenschaften des Textes wie grafischer Zeichensatz, Unterstreichung, fetter Druck etc. erkannt und dem interpretierten Text hinzugefügt werden.

4. Methode entsprechend Anspruch 2, **gekennzeichnet dadurch, dass** Textinformation, die nicht interpretiert werden konnte, nicht gelöscht sondern im wiedererstellten/synthetisierten Bild als passend markierter Teil der betroffenen ursprünglichen Buchstabe/des betroffenen ursprünglichen Wortes/Symbols/Satzes angezeigt wird.

5. Methode entsprechend einem der Ansprüche 1 - 3, **gekennzeichnet dadurch, dass** das ursprüngliche Bild in zwei Blöcke segmentiert wird, wobei einer Block die interpretierten Informationen und der andere Block die restlichen relevanten Informationen des ursprünglichen Bilds enthält und das diese Blöcke so etikettiert werden, dass sie einzeln verarbeitet und übertragen werden können und, wann immer gewünscht, neu kombiniert werden können, um eine Reproduktion des ursprünglichen Bildes zu erstellen.

6. Methode entsprechend einem der Ansprüche 1 - 4, **gekennzeichnet dadurch, dass** anschließend zur Reproduktion des neu kombinierten Bildes auf einem anderen Format als das Format des ursprünglichen Bildes, die Reproduktion so durchgeführt wird, dass das Layout des reproduzierten Bildes so nah wie möglich mit dem des ursprünglichen Bildes übereinstimmt.

7. Methode entsprechend einem der Ansprüche 1 - 5, **gekennzeichnet dadurch, dass** Textinformation automatisch hinsichtlich solche Eigenschaften wie Name des Autors und der Publikation und Schlüsselwörter aus Überschriften analysiert und etikettiert wird, wodurch systematische Datenspeicherung und Abruf von Information aus Datenbanken erleichtert wird.

8. Mittel daran angepasst, um die Methode der Ansprüchen 1 - 7 für mobile intelligente Aufnahme, Verarbeitung und Speicherung von Text und gemischter Information von Text und Bild in einem Bild, wobei das Mittel eine digitale Kamera mit Mikroprozessor, Speicher und Software für das Analysieren des Bildes in Bezug auf seine Information, die durch Schrifterkennungstechniken erkannt und interpretiert und als komprimierte Code für die Weiterverarbeitung gespeichert wird, enthalten, worin das Mittel einen Mobilfernsprecher enthält, der an der Kamera angeschlossen ist, womit die Information mit dem Mobilfernsprecher übertragen wird.

9. Mittel gemäß Anspruch 8, **gekennzeichnet dadurch, dass** das Objektiv der Kamera als Ultrabreitwinkelobjektiv konzipiert ist.

10. Mittel gemäß Anspruch 9, **gekennzeichnet dadurch, dass** Distorsionen im Objektiv numerisch behoben werden, wodurch ein unverzerrtes Bild neu erstellt werden kann.

11. Mittel gemäß Anspruch 9, **gekennzeichnet dadurch, dass** das Objektiv als ein Facetteobjektiv entsprechend dem Appositionsprinzip, mit gewisser Überlappung zwischen den Teilbildern, konzipiert ist, so dass ein ununterbrochenes Gesamtbild mit der Software erstellt wird.

12. Mittel gemäß Anspruch 9, **gekennzeichnet dadurch, dass** das Objektiv als ein Facetteobjektiv entsprechend dem Überlagerungsprinzip konzipiert ist und dass, wenn erforderlich, Distorsionen mit der Software korrigiert werden.

13. Mittel gemäß einer der Ansprüchen 8 - 12, **gekennzeichnet dadurch, dass** die Kamera mit Funktionen für Rahmung ausgestattet ist, so dass nur spezifisch gewählte Teile des Bildes gespeichert und verarbeitet werden, wodurch entbehrliche Information bereits an der Quelle eliminiert wird.

## Revendications

1. Méthode pour la formation image intelligente mobile, par laquelle un appareil-photo numérique est employé pour capturer, traiter et stocker le texte/les symboles et l'information mélangée du texte et les images dans les images capturées au moyen de l'appareil-photo numérique avec le microprocesseur, la mémoire et le logiciel, ladite image prise par ledit appareil-photo étant analysé en ce qui concerne son information, qui est identifiée et interprétée par des techniques d'identification des textes et est stockée comme code comprimé pour une transformation plus ultérieure, **caractérisée en ce que**
a) l'utilisateur décide si ledit appareil-photo sera employé comme appareil-photo intelligent ou comme appareil-photo conventionnel, et que, si l'appareil-photo est employé comme appareil-photo intelligent
b) l'image originale est interprétée,
c) l'interprétation est employée pour recréer ou synthétiser une image,
d) l'image recréée/synthétisée est comparée au mage original,
e) les sections de l'information originale non interprétées ou inexactement interprétées sont déterminées basé sur les résultats de la comparaison et sont marquées,
f) l'utilisateur intervient, une fois requis, d'aider l'appareil-photo avec l'interprétation de l'aide sectionne, et
g) le résultat est transmis par un mobilophone relié à ledit appareil-photo.

2. Méthode selon la revendication 1, **caractérisée en ce que** l'image originale est supprimée de la mémoire de l'appareil-photo quand il y a une équivalence suffisamment bonne entre ladite image originale et ladite image recréée/synthétisée

3. Méthode selon la revendication 1, **caractérisée en ce que** les propriétés des textes telles que en font, en soulignée, en italic etc. sont identifiées et ajoutées au texte interprété.

4. Méthode selon la revendication 2, **caractérisée en ce que** l'information des textes, qui ne pourrait pas être interprétée, n'est pas supprimée mais est montrée dans l'image recréée/synthétisée comme partie convenablement marquée du caractère/mot/symbole/paragraphe original convenable.

5. Méthode selon une des revendications 1 - 3, **caractérisée en ce que** l'image originale est segmentée dans deux blocs, par lequel un bloc contienne l'information interprétée et l'autre bloc l'information appropriée restante de l'image originale et que ces blocs sont étiquetés tels qu'ils peuvent être traités et transmis individuellement et, lorsque désiré, recombiné pour créer une reproduction de l'image originale.

6. Méthode selon une des revendications 1-4, **caractérisée en ce que** dans le contexte avec la reproduction de l'image recombinée sur un autre format que le format de l'image originale, ladite reproduction est exécutée tels que la disposition de l'image reproduite est d'accord aussi étroitement que possible avec celle de l'image originale.

7. Méthode selon une des revendications 1 - 5, **caractérisée en ce que** l'information des textes est automatiquement analysée en ce qui concerne et étiquetée par des caractéristiques telles que le nom de l'auteur et de la publication et les mots-clés hors des titres, facilitant de ce fait le stockage et la récupération systématiques d'information dans les bases de données.

8. Moyens adaptés pour exécuter la méthode de revendications 1 - 7, pour la capture intelligente mobile, le traitement, le stockage du texte et de l'information mélangée du texte et les images dans une image, les moyens comportant un appareil-photo numérique avec le microprocesseur, la mémoire et le logiciel pour analyser l'image en ce qui concerne son information, qui est identifiée et interprétée par des techniques d'identification des textes et est stockée pendant que code comprimé pour une transformation plus ultérieure, où ledit moyen comporte un mobilophone relié à ledit appareil-photo, par lequel ladite information interprétée soit transmise par ledit mobilophone.

9. Moyens selon la revendication 8, **caractérisé en ce que** l'objectif de l'appareil-photo est conçu pour ultra grand-angle.

10. Moyens selon la revendication 9, **caractérisé en ce que** des déformations dans l'objectif sont numériquement corrigées, de sorte qu'une image non tordue puisse être recréée.

11. Moyens selon la revendication 9, **caractérisé en ce que** ledit objectif est conçu comme objectif de facette selon le principe d'apposition, avec certain recouvrement entre les images partielles et **en ce que** une image totale continue est produite par le logiciel.

12. Moyens selon la revendication 9, **caractérisé en ce que** ledit objectif est conçu comme objectif de facette selon le principe de superpositione **en ce que**, une fois requises, des déformations sont corrigées par le logiciel.

13. Moyens selon une des revendications 8 - 12, **caractérisé en ce que** ledit appareil-photo est équipé de fonctions encadrantes, de sorte que seulement des parties choisies spécifiques de l'image soient stockées et traitées, éliminant de ce fait l'information dispensable déjà à la source.
